# EUROPÄISCHE PATENTSCHRIFT

(11) **EP 2 504 717 B1**
(45) Veröffentlichungstag und Bekanntmachung des Hinweises auf die Patenterteilung: **01.04.2015**
(21) Anmeldenummer: 10762666.5
(22) Anmeldetag: 06.10.2010
(51) Int. Cl.: G01S 7/521, G10K 11/00

(54) **ULTRASCHALLSENSOR**
ULTRASONIC SENSOR
CAPTEUR À ULTRASONS

(30) Priorität: 23.11.2009 DE 102009046972
(43) Veröffentlichungstag der Anmeldung: 03.10.2012
(73) Patentinhaber: Robert Bosch GmbH, 70442 Stuttgart (DE)
(72) Erfinder: SCHNEIDER, Michael, 76307 Karlsbad (DE); HOENES, Frank, 71254 Ditzingen (DE); JORDANEK, Olaf, 71299 Wimsheim (DE)
(86) Internationale Anmeldenummer: PCT/EP2010/064864
(87) Internationale Veröffentlichungsnummer: WO 2011/060999

(56) Entgegenhaltungen:
- EP-A2- 1 710 785
- WO-A1-02/12027
- DE-A1-102006 028 213
- US-A1- 2009 196 121

## Beschreibung

Die vorliegende Erfindung betrifft einen Ultraschallsensor und ein Ultraschallsensorsystem.

### Stand der Technik

Zur Schallentkopplung zwischen dem Membrantopf (Ultraschallerzeuger) und dem Sensorgehäuse beziehungsweise der Sensoraufnahme im Stoßfänger wird üblicherweise ein Silikonring als Entkopplungselement verwendet. Durch eine Anordnung zwischen dem Membrantopf und dem Sensorgehäuse sollen sowohl parasitäre Schallabstrahlungen vermieden, als auch, durch die Sensormembran eingeprägter Körperschall bedämpft werden. Ultraschallsensoren, welche Entkopplungselemente aufweisen, werden in den Druckschriften US 2009/0196121 A1, WO 2007/144047, DE 102 37 720 A1, DE 102 37 721 A1 und DE 10 2007 043 500 A1 beschreiben.

Typischerweise kann jedoch nicht sichergestellt werden, dass zwischen dem Entkopplungselement und dem Membrantopf beziehungsweise dem Gehäuse kein Spalt vorliegt durch den in axialer Richtung Schall eindring und zu Funktionsstörungen führt. Insbesondere ist nach der Montage eine optische Kontrolle des Bereiches zwischen dem Entkopplungselement und dem Gehäuse nicht mehr möglich. Dies trifft vor allem auch dann zu, wenn auf der Sichtseite, das Entkopplungselement bündig mit dem Membrantopf abschließt. Somit kann die Situation eintreten, dass durch die Spalte der Schall des Membrantopfes austritt und eine Schallausbreitung in nicht erwünschte Räume, wie den Rückraum des Stoßfängers, ergibt. Weiterhin besteht die Möglichkeit, dass der Körperschall keine Bedämpfung erfährt und den Effekt der unmotivierten Schallabstrahlung verstärkt. Nicht plane Flächen können ebenfalls zu Spalten führen.

### Offenbarung der Erfindung

Gegenstand der vorliegenden Erfindung ist ein Ultraschallsensor, welcher einen Membrantopf, ein Gehäuse und ein, insbesondere schwingungsdämpfendes, Entkopplungselement umfasst, wobei der Membrantopf und das Gehäuse jeweils eine Mantelfläche aufweisen, wobei das Entkopplungselement zumindest teilweise aus einem elastischen Material ausgebildet ist, wobei das Entkopplungselement eine durchgängige Aussparung aufweist, welche durch eine Innenwandung des Entkopplungselementes begrenzten ist, wobei der Membrantopfes und/oder das Gehäuse zumindest teilweise in der Aussparung angeordnet sind.

Erfindungsgemäß ist die Innenwandung des Entkopplungselements derart durch Kontraktion des elastischen Materials zumindest um einen, den Membrantopf und das Gehäuse umfänglich umlaufenden Bereich der Mantelfläche des Membrantopfes und/oder einer auf der Mantelfläche des Manteltopfes aufgebrachten Lackschicht und der Mantelfläche des Gehäuses gespannt, dass die Innenwandung in diesem Bereich bündig, also spaltfrei, an der Mantelfläche des Membrantopfes und/oder der auf der Mantelfläche des Membrantopfes aufgebrachten Lackschicht und der Mantelfläche des Gehäuses anliegt.

Dies kann beispielsweise dadurch realisiert werden, dass das Entkopplungselement bei der Herstellung mit einer Aussparung ausgestattet wird, welche geringer dimensioniert ist als dies für die dehnungsfreie Aufnahme des Membrantopfes und/oder des Gehäuses benötigt wird.

Auf diese Weise kann sich während der Endmontage ein frühzeitiger Formschluss zwischen dem Entkopplungselement und dem Membrantopf, der Lackschicht und/oder dem Gehäuse einstellen. So kann das Entkopplungselement formschlüssig, insbesondere formschlüssig und kraftschlüssig, mit dem Membrantopf und/oder der Lackschicht und/oder dem Gehäuse lösbar verbunden werden.

Durch diese Maßnahme können undefiniert auftretender Restschall, parasitäre Schallabstrahlungen und eingeprägter Körperschall vermieden werden, welche zu einer erhöhten Sensorempfindlichkeit und sogar zu Fehlechos führen können.

Eine Optimierung der Geometrie des Entkopplungselements ist weiterhin auch vorteilhaft, da eine Optimierung der Geometrie der Sensoraufnahme, insbesondere bei Sensoraufnahmen in Form von gestanzten oder gebohrten Loch in einem Stoßfänger, nicht ohne einen nicht zu vernachlässigenden technischen Mehraufwand möglich ist.

Im Rahmen einer Ausführungsform ist das durch die Mantelfläche definierte Auβenmaß des Membrantopfes geringer ist als das durch die Mantelfläche definierte Außenmaß des Gehäuses, wobei der Membrantopf derart auf und/oder in dem Gehäuse angeordnet/ausgebildet ist, dass das Gehäuse eine, den Membrantopf umlaufende, stufenauftrittartige Deckfläche aufweist. Dabei ist die Innenwandung des Entkopplungselements vorzugsweise in einem ersten Bereich im wesentlichen komplementär zu der Mantelfläche des Membrantopfes und/oder in einem zweiten Bereich im Wesentlichen komplementär zu der stufenauftrittartigen Deckfläche des Gehäuses und/oder in einem dritten Bereich im wesentlichen komplementär zu einem, an die stufenauftrittartige Deckfläche des Gehäuses angrenzenden Bereich der Mantelfläche des Gehäuses ausgebildet ist. Dies hat den Vorteil, dass durch den von außen kontrollierbaren bündigen Sitz des Entkopplungselements zur Membranoberfläche sichergestellt werden kann, dass sich zwischen Membrantopf und Gehäuse im Rückraum keine Spalte einstellen, die eine korrekte Funktion des Ultraschallsystems beeinträchtigen können. Im Rahmen der Erfindung wird unter "im Wesentlichen komplementär" insbesondere verstanden, dass Abweichungen, welche auf einer geringeren Dimensionierung der Aussparung zum Erzielen einer Kontraktionskraft umfasst sind.

Der Membrantopf und/oder das Gehäuse und/oder das Entkopplungselement sind vorzugsweise rotationssymmetrisch ausgestaltet. Insbesondere können der Membrantopf und/oder das Gehäuse zylindrisch oder kegelstumpfförmig ausgestaltet sein.

Der Membrantopf kann zusätzlich zur Mantelfläche eine Deckfläche aufweisen. Auf dieser Deckfläche und/oder daran angrenzende Bereiche der Mantelfläche kann der Membrantopf die Lackschicht aufweisen. In diesem Fall kann die Innenwandung des Entkopplungselements derart durch Kontraktion des elastischen Materials um den, den Membrantopf umfänglich umlaufenden, mit der Lackschicht versehenen Bereich der Mantelfläche des Membrantopfes gespannt sein, dass die Innenwandung in diesem Bereich bündig und somit spaltfrei an zumindest einem Teil der, auf der Mantelfläche des Membrantopfes aufgebrachten Lackschicht anliegt.

In dem ersten Bereich kann das Entkopplungselement in Form eines Hohlzylinders oder eines mit einer Bohrung versehenen Kegelstumpfes ausgebildet sein. Zur Erleichterung der Positionierung und Montage des Sensors, ist das Entkopplungselement in dem ersten Bereich vorzugsweise in Form eines mit einer Bohrung versehenen Kegelstumpfes ausgebildet.

Im Rahmen einer weiteren Ausführungsform ist daher das Entkopplungselement in dem ersten Bereich in Form eines mit einer Bohrung versehenen Kegelstumpfes ausgebildet.

Im Rahmen einer weiteren Ausführungsform ist das Entkopplungselements in dem dritten Bereich in Form einer Lippe oder in Form eines rotationssymmetrischen Körpers mit einer Bohrung entlang der Rotationsachse, beispielsweise in Form eines Hohlzylinders oder eines mit einer Bohrung versehenen Kegelstumpfes, ausgebildet. Auf diese Weise kann eine höhere Verbautoleranz des Entkopplungselementes erzielt werden. Weiterhin kann sich im Fall einer, in dem dritten Bereich, in Form eines rotationssymmetrischen Körpers mit einer Bohrung entlang der Rotationsachse ausgebildeten Innenwandung eine verbesserte Dämpfung der parasitären Schwingungen auf dem Gehäuse ergeben, da der rotationssymmetrische Körper einen großen Bereich auf dem Gehäuse umfasst.

Im Rahmen einer weiteren Ausführungsform ist der Bereich des Gehäuses, in dem die stufenauftrittartige Deckfläche des Gehäuses an die Mantelfläche des Gehäuses angrenzt in Form einer abgerundeten Kante ausgestaltet. Die Innenwandung des Entkopplungselementes ist dabei insbesondere in einem vierten Bereich im Wesentlichen komplementär zu der abgerundeten Kante des Gehäuses ausgebildet. Der Grundkreis der abgerundeten Kante ist vorzugsweise derart gewählt, dass der zur abgerundeten Kante komplementäre Teil des Entkopplungselements, vor dem Erreichen der eigentlichen korrekten Position des Entkopplungselements, auf dem Gehäuse zu liegen kommt. Auf diese Weise kann sichergestellt werden, dass sich Schallanteile, die sich zwischen der Mantelfläche des Membrantopfes und der Innenwandung des Entkopplungselements beziehungsweise zwischen der Deckfläche des Gehäuses und einer darauf aufsitzenden Grundfläche des Entkopplungselements befinden nicht zur Seiten austreten können.

So kann vorteilhafterweise das "Aufsitzen" des Entkopplungselementes auf dem Sensorrand bei der Montage verhindert werden und das Entkopplungselement, rutscht bei leichtem Druck in die korrekte Position.

Im Rahmen einer weiteren Ausführungsform ist der erste Bereich der Innenwandung des Entkopplungselementes derart durch die Kontraktion des elastischen Materials um die Mantelfläche des Membrantopfes und/oder die auf der Mantelfläche des Membrantopfes aufgebrachte Lackschicht gespannt, dass die Innenwandung zumindest in einem den Membrantopf umlaufenden Teil des ersten Bereiches bündig (spaltfrei) an der Mantelfläche des Membrantopfes und/oder der auf der Mantelfläche des Membrantopfes aufgebrachten Lackschicht anliegt.

Im Rahmen einer weiteren Ausführungsform ist der dritte Bereich der Innenwandung des Entkopplungselementes derart durch die Kontraktion des elastischen Materials um die Mantelfläche des Gehäuses gespannt, dass die Innenwandung in diesem Bereich bündig (spaltfrei) an der Mantelfläche des Gehäuses anliegt. Die geometrische Auslegung der Lippe kann derart erfolgen, dass eine gewisse Vorspannung mitgegeben wird, die sicherstellt, dass die Lippe beziehungsweise der rotationssymmetrische Körper mit Bohrung entlang der Rotationsachse auf der Ecke/Kante des Sensorgehäuses zum Aufliegen kommt. Somit ergibt sich neben einer axialen Auflagefläche des zweiten Bereiches der Innenwandung auf der stufenauftrittartigen Deckfläche des Gehäuses eine zusätzliche Komponente in radialer Richtung.

Im Rahmen einer weiteren Ausführungsform ist der vierte Bereich der Innenwandung des Entkopplungselementes derart durch die Kontraktion des elastischen Materials um die abgerundete Kante des Gehäuses gespannt, dass die Innenwandung in diesem Bereich bündig (spaltfrei) an der abgerundeten Kante des Gehäuses anliegt.

Insbesondere weist das Entkopplungselement zusätzlich zur Aussparung zur Aufnahme des Membrantopfes und/oder des Gehäuses keine weiteren Aussparungen auf. Vorzugsweise weist das Entkopplungselement keine Aussparungen auf, welche sich von der Aussparung zur Aufnahme des Membrantopfes und/oder des Gehäuses ausgehend radial durch das Entkopplungselement erstrecken.

Im Rahmen einer weiteren Ausführungsform weist die Mantelfläche des Gehäuses mindestens eine Ausnehmung und die Innenwandung des Entkopplungselementes mindestens eine Erhebung und/oder die Mantelfläche des Gehäuses mindestens eine Erhebung und die Innenwandung des Entkopplungselementes mindestens eine, eine, insbesondere nicht durch das Entkopplungselement durchgehende, Ausnehmung zum Verrasten des Entkopplungselementes mit dem Gehäuse auf. Auf diese Weise kann die Verbindung zwischen Entkopplungselement und Membrantopf beziehungsweise Gehäuse unter Vermeidung von Spaltbildung verstärkt werden.

Vorzugsweise weist das Entkopplungselement auf seiner Außenseite keine Ausnehmungen und Erhebungen zum Verrasten des Entkopplungselementes mit einer Sensoraufnahme auf. Dies liegt darin begründet, dass eine derartige Verrastung eine Spaltbildung zwischen Entkopplungselement und Membrantopf beziehungsweise Gehäuse begünstigen könnte.

Ein weiterer Gegenstand ist ein Ultraschallsensorsystem, welches einen erfindungsgemäßen Ultraschallsensor und eine Sensoraufnahme zur Aufnahme des Ultraschallsensors umfasst.

Bei der Sensoraufnahme kann es sich beispielsweise um einen Stoßfänger für ein Kraftfahrzeug. Insbesondere kann es sich bei der Sensoraufnahme um einen mit einer Aussparung versehenen Stoßfänger für ein Kraftfahrzeug handeln. Beispielsweise kann es sich bei der Sensoraufnahme um einen mit einer Aussparung versehenen Stoßfänger handeln, welcher ein in der Aussparung montiertes Kunststoffspritzteil zur Verbesserung der Aufnahme des Ultraschallsensors handeln.

### Zeichnungen

Weitere Vorteile und vorteilhafte Ausgestaltungen der erfindungsgemäßen Umstände werden durch die Zeichnungen veranschaulicht und In der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1a: einen vergrößerten, schematischen Ausschnitt aus einem Querschnitt durch eine Ausführungsform eines erfindungsgemäßen Ultraschallsensors;
- Fig. 1b: einen verkleinerten, schematischen Querschnitt durch den in Fig. 1a gezeigten Ultraschallsensor; und
- Fig. 2: einen vergrößerten, schematischen Querschnitt durch eine weitere Ausführungsform eines erfindungsgemäßen Ultraschallsensors.

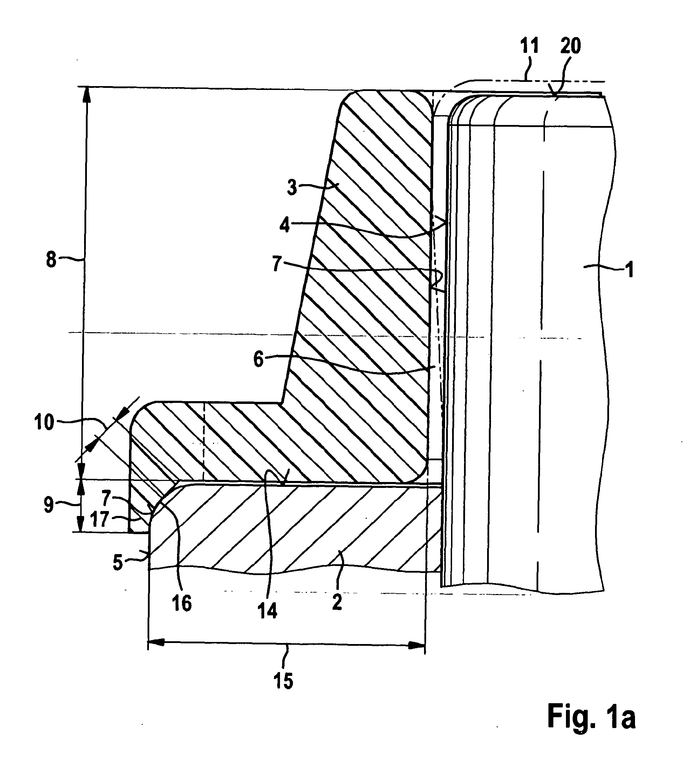

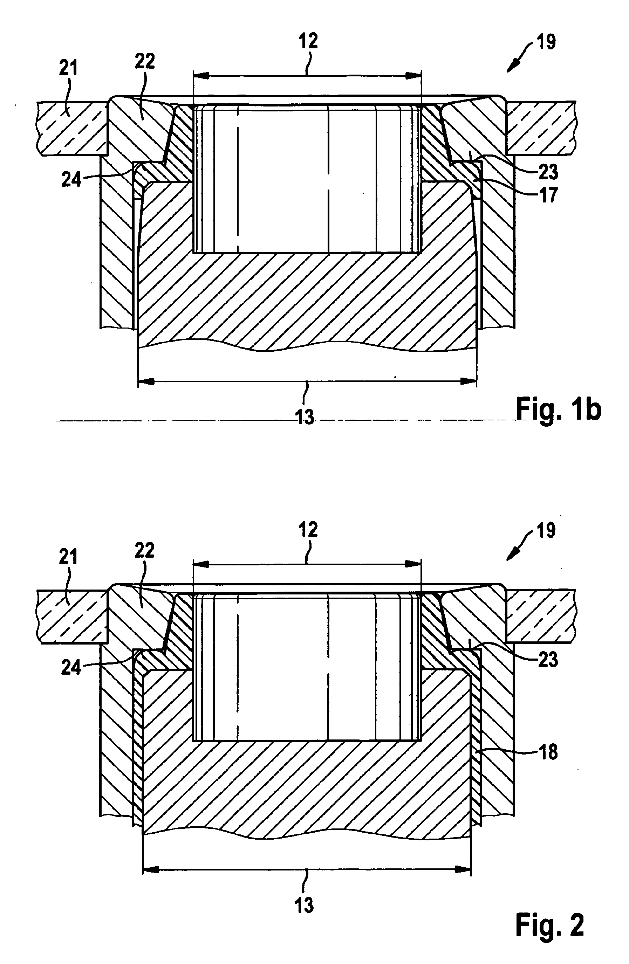

Die Figuren 1a und 1b zeigen eine Ausführungsform eines erfindungsgemäßen Ultraschallsensors, welcher einen Membrantopf 1, ein Gehäuse 2 und ein Entkopplungselement 3 umfasst. Der Membrantopf 1 und das Gehäuse 2 weisen dabei jeweils eine Mantelfläche 4,5 auf. Auf der Deckfläche 20 des Membrantopfes 1 und auf einem Teil der Mantelfläche 4 des Membrantopfes 1, insbesondere auf einem an die Deckfläche 20 angrenzenden Bereiche der Mantelfläche 4 des Membrantopfes 1, ist eine Lackschicht 11 aufgebracht. Das Entkopplungselement 3 ist zumindest teilweise aus einem elastischen Material ausgebildet und weist eine durchgängige Aussparung 6 auf, welche durch eine Innenwandung 7 des Entkopplungselementes 3 begrenzten ist. Der Membrantopfes 1 und das Gehäuse 2 sind dabei zumindest teilweise in der Aussparung 6 angeordnet. Die Innenwandung 7 des Entkopplungselements 3 ist dabei derart durch Kontraktion des elastischen Materials um zwei, das Gehäuse 2 umfänglich umlaufende Bereiche 9,10 der Mantelfläche 5 des Gehäuses 2 und um einen, den Membrantopf 1 umfänglich umlaufenden, mit der Lackschicht 11 versehenen Bereich 8 der Mantelfläche 4 des Membrantopfes 1 gespannt, dass die Innenwandung 7 in diesen Bereichen 8,9,10 bündig und somit spaltfrei an der Mantelfläche 5 des Gehäuses 2 und an der auf der Mantelfläche 4 des Membrantopfes 1 aufgebrachten Lackschicht 11 anliegt.

Die Figuren 1a und 1b zeigen weiterhin, dass das durch die Mantelfläche 4 definierte Außenmaß 12 des Membrantopfes 1 geringer ist als das durch die Mantelfläche 5 definierte Außenmaß 13 des Gehäuses 2. Dabei ist der Membrantopf 1 derart auf dem Gehäuse 2 angeordnet, dass das Gehäuse 2 eine, den Membrantopf 1 umlaufende, stufenauftrittartige, insbesondere ringförmige, Deckfläche 14 aufweist.

Darüber hinaus zeigen die Figuren 1 a und 1 b, dass die Innenwandung 7 des Entkopplungselements 3 in einem ersten Bereich 8 im wesentlichen komplementär zu der Mantelfläche 4 des Membrantopfes 1, in einem zweiten Bereich 15 im Wesentlichen komplementär zu der stufenauftrittartigen Deckfläche 14 des Gehäuses 2 und in einem dritten Bereich 9 im wesentlichen komplementär zu einem, an die stufenauftrittartige Deckfläche 14 des Gehäuses 2 angrenzenden Bereich der Mantelfläche 5 des Gehaüses 2 ausgebildet ist.

In dem ersten Bereich 8 ist das Entkopplungselement 3 in Form eines mit einer Bohrung versehenen Kegelstumpfes ausgebildet. Dies dient insbesondere zur Erleichterung der Positionierung und Montage des Sensors. In dem dritten Bereich 9 ist die Innenwandung 7 des Entkopplungselements 3 in Form einer Lippe 17 ausgebildet. Der dritte Bereich 9 der Innenwandung 7 des Entkopplungselementes 3 ist dabei derart durch die Kontraktion des elastischen Materials um die Mantelfläche 5 des Gehäuses 2 gespannt ist, dass die Innenwandung 7 in diesem Bereich 9 bündig (spaltfrei) an der Mantelfläche 5 des Gehäuses 2 anliegt.

Der Bereich des Gehäuses 2, in dem die stufenauftrittartige Deckfläche 14 des Gehäuses 2 an die Mantelfläche 5 des Gehäuses 2 angrenzt ist dabei in Form einer abgerundeten Kante 16 ausgestaltet. Die Innenwandung 7 des Entkopplungselementes 3 ist dabei in einem vierten Bereich 10 im Wesentlichen komplementär zu der abgerundeten Kante 16 des Gehäuses 2 ausgebildet. Der vierte Bereich 16 der Innenwandung 7 des Entkopplungselementes 3 ist dabei derart durch die Kontraktion des elastischen Materials um die abgerundete Kante 16 des Gehäuses 2 gespannt, dass die Innenwandung 7 in diesem Bereich 10 bündig (spaltfrei) an der abgerundeten Kante 16 des Gehäuses 2 anliegt.

Die Figur 1b zeigt zudem, dass der Ultraschallsensor durch eine Sensoraufnahme 19 aufgenommen ist. Bei der Sensoraufnahme handelt es sich dabei um einen Stoßfänger 21 für ein Kraftfahrzeug, welcher mit einer Aussparung versehenen ist, in der ein Kunststoffspritzteil 22 zur Verbesserung der Aufnahme des Ultraschallsensors montiert ist. Figur 1b veranschaulicht weiterhin, dass nach erfolgter Montage sich das Entkopplungselement 3 durch die Elastizität des Materials in der Weise verformt, dass es in den vorhanden Freiraum zwischen Sensoraufnahme 19, insbesondere Kunststoffspritzteil 22 der Sensoraufnahme 19, und Gehäuse 2, insbesondere in einer Richtung parallel zur Sensorachse, ausweicht. Dabei wird die Oberfläche 23 des komplementär zu der stufenauftrittartigen Deckfläche 14 ausgebildete zweite Bereichs 12 des Entkopplungselementes 3 gegen die Sensoraufnahme 19, insbesondere das Kunststoffspritzteil 22 der Sensoraufnahme 19, weiterhin insbesondere die innere Deckfläche 24 der Sensoraufnahme 19 beziehungsweise des Kunststoffspritzteils 22 der Sensoraufnahme 19 gepresst. Auf diese Weise kann verhindert werden, dass Schall sich zwischen der Sensoraufnahme 19, insbesondere dem Kunststoffteil 22 der Sensoraufnahme, und dem Entkopplungselement fortsetzen kann.

Der in Figur 2 gezeigte Ultraschallsensor unterscheidet sich von dem in den Figuren 1a und 1b gezeigten Ultraschallsensor dadurch, dass das Entkopplungselements 3 in dem dritten Bereich 9 in Form eines rotationssymmetrischen Körpers mit einer Bohrung entlang der Rotationsachse ausgebildet ist.

## Patentansprüche

1. Ultraschallsensor, umfassend
- einen Membrantopf (1),
- ein Gehäuse (2) und
- ein Entkopplungselement (3),
wobei der Membrantopf (1) und das Gehäuse (2) jeweils eine Mantelfläche (4,5) aufweisen,
wobei das Entkopplungselement (3) zumindest teilweise aus einem elastischen Material ausgebildet ist,
wobei das Entkopplungselement (3) eine durchgängige Aussparung (6) aufweist, welche durch eine Innenwandung (7) des Entkopplungselementes (3) begrenzt ist,
wobei der Membrantopf (1) und/oder das Gehäuse (2) zumindest teilweise in der Aussparung (6) angeordnet sind,
**dadurch gekennzeichnet, dass**
die Innenwandung (7) des Entköpplungselements (3) derart durch Kontraktion des elastischen Materials zumindest um jeweils einen, den Membrantopf (1) und das Gehäuse (2) umfänglich umlaufenden Bereich (8,9,10) der Mantelfläche (4) des Membrantopfes (1) und/oder einer auf der Mantelfläche (4) des Manteltopfes (1) aufgebrachten Lackschicht (11) und der Mantelfläche (5) des Gehäuses gespannt ist, dass die Innenwandung (7) in diesem Bereich bündig an der Mantelfläche (4) des Membrantopfes (1) und/oder der auf der Mantelfläche (4) des Membrantopfes (1) aufgebrachten Lackschicht (11) und der Mantelfläche (5) des Gehäuses (2) anliegt.

2. Ultraschallsensor nach Anspruch 1, **dadurch gekennzeichnet, dass** das durch die Mantelfläche (4) definierte Außenmaß (12) des Membrantopfes (1) geringer ist als das durch die Mantelfläche (5) definierte Außenmaß (13) des Gehäuses (2), wobei der Membrantopf (1) derart auf und/oder in dem Gehäuse (2) angeordnet ist, dass das Gehäuse (2) eine, den Membrantopf (1) umlaufende, stufenauftrittartige Deckfläche (14) aufweist, wobei die Innenwandung (7) des Entkopplungselements (3) in einem ersten Bereich (8) im wesentlichen komplementär zu der Mantelfläche (4) des Membrantopfes (1) und/oder einer auf der Mantelfläche (4) des Membrantopfes (1) aufgebrachten Lackschicht (11) und/oder in einem zweiten Bereich (15) im Wesentlichen komplementär zu der stufenauftrittartigen Deckfläche (14) des Gehäuses (2) und/oder in einem dritten Bereich (9) im wesentlichen komplementär zu einem, an die stufenauftrittartige Deckfläche (14) des Gehäuses (2) angrenzenden Bereich der Mantelfläche (5) des Gehäuses (2) ausgebildet ist.

3. Ultraschallsensor nach Anspruch 2, **dadurch gekennzeichnet, dass** die Innenwandung (7) des Entkopplungselements (3) in einem dritten Bereich (9) im wesentlichen komplementär zu einem, an die stufenauftrittartige Deckfläche (14) des Gehäuses (2) angrenzenden Bereich der Mantelfläche (5) des Gehäuses (2) ausgebildet ist, wobei der dritte Bereich (9) der Innenwandung (7) des Entkopplungselementes (3) derart durch die Kontraktion des elastischen Materials um die Mantelfläche (5) des Gehäuses (2) gespannt ist, dass die Innenwandung (7) in diesem Bereich (9) bündig an der Mantelfläche (5) des Gehäuses (2) anliegt.

4. Ultraschallsensor nach Anspruch 2 oder 3, **dadurch gekennzeichnet, dass** der Bereich des Gehäuses (2), in dem die stufenauftrittartige Deckfläche (14) des Gehäuses (2) an die Mantelfläche (5) des Gehäuses (2) angrenzt in Form einer abgerundeten Kante (16) ausgestaltet ist, wobei die Innenwandung (7) des Entkopplungselementes (3) in einem vierten Bereich (10) im wesentlichen komplementär zu der abgerundeten Kante (16) des Gehäuses (2) ausgebildet ist.

5. Ultraschallsensor nach Anspruch 4, **dadurch gekennzeichnet, dass** der vierte Bereich (10) der Innenwandung (7) des Entkopplungselementes (3) derart durch die Kontraktion des elastischen Materials um die abgerundete Kante (16) des Gehäuses (2) gespannt ist, dass die Innenwandung (7) in diesem Bereich (18) bündig an der abgerundeten Kante (16) des Gehäuses (2) anliegt.

6. Ultraschallsensor nach einem der Ansprüche 1 bis 5, **dadurch gekennzeichnet, dass** die Mantelfläche (5) des Gehäuses (2) mindestens eine Ausnehmung und die Innenwandung (7) des Entkopplungselementes (3) mindestens eine Erhebung und/oder die Mantelfläche (5) des Gehäuses (2) mindestens eine Erhebung und die Innenwandung (7) des Entkopplungselementes (3) mindestens eine Ausnehmung zum Verrasten des Entkopplungselementes mit dem Gehäuse (2) aufweist.

7. Ultraschallsensor nach einem der Ansprüche 2 bis 6, **dadurch gekennzeichnet, dass** das Entkopplungselements (3) in dem dritten Bereich (9) in Form einer Lippe (17) oder in Form eines rotationssymmetrischen Körpers mit einer Bohrung entlang der Rotationsachse (18), beispielsweise in Form eines Hohlzylinders oder eines mit einer Bohrung versehenen Kegelstumpfes, ausgebildet ist.

8. Ultraschallsensor nach einem der Ansprüche 2 bis 7, **dadurch gekennzeichnet, dass** das Entkopplungselement (3) in dem ersten Bereich (8) in Form eines mit einer Bohrung versehenen Kegelstumpfes ausgebildet ist.

9. Ultraschallsensorsystem, umfassend einen Ultraschallsensor nach einem der Ansprüche 1 bis 9 und eine Sensoraufnahme (19) zur Aufnahme des Ultraschallsensors.

## Claims

1. Ultrasonic sensor, comprising:
- a diaphragm cup (1),
- a housing (2) and
- a decoupling element (3),
wherein the diaphragm cup (1) and the housing (2) respectively have a lateral surface (4, 5),
wherein the decoupling element (3) is formed at least partially from an elastic material,
wherein the decoupling element (3) has a continuous recess (6), which is bounded by an inner wall (7) of the decoupling element (3),
wherein the diaphragm cup (1) and/or the housing (2) is/are at least partially arranged in the recess (6),
**characterized in that**
the inner wall (7) of the decoupling element (3) is strained by contraction of the elastic material at least around an area (8, 9, 10) of the lateral surface (4) of the diaphragm cup (1) that circumferentially surrounds the diaphragm cup (1) and the housing (2) and/or of a lacquer layer (11) applied on the lateral surface (4) of the diaphragm cup (1) and of the lateral surface (5) of the housing in such a way that the inner wall (7) in this area rests flush against the lateral surface (4) of the diaphragm cup (1) and/or the lacquer layer (11) applied on the lateral surface (4) of the diaphragm cup (1) and the lateral surface (5) of the housing (2).

2. Ultrasonic sensor according to Claim 1, **characterized in that** the outside dimension (12) of the diaphragm cup (1) that is defined by the lateral surface (4) is smaller than the outside dimension (13) of the housing (2) that is defined by the lateral surface (5), wherein the diaphragm cup (1) is arranged on and/or in the housing (2) in such a way that the housing (2) has a step-like top surface (14) running around the diaphragm cup (1), wherein the inner wall (7) of the decoupling element (3) is formed in a first area (8) in an essentially complementary fashion with respect to the lateral surface (4) of the diaphragm cup (1) and/or a lacquer layer (11) applied on the lateral surface (4) of the diaphragm cup (1) and/or is formed in a second area (15) in an essentially complementary fashion with respect to the step-like top surface (14) of the housing (2) and/or is formed in a third area (9) in an essentially complementary fashion with respect to an area of the lateral surface (5) of the housing (2) bordering the step-like top surface (14) of the housing (2).

3. Ultrasonic sensor according to Claim 2, **characterized in that** the inner wall (7) of the decoupling element (3) is formed in a third area (9) in an essentially complementary fashion with respect to an area of the lateral surface (5) of the housing (2) bordering the step-like top surface (14) of the housing (2), wherein the third area (9) of the inner wall (7) of the decoupling element (3) is strained by the contraction of the elastic material around the lateral surface (5) of the housing (2) in such a way that the inner wall (7) in this area (9) rests flush against the lateral surface (5) of the housing (2).

4. Ultrasonic sensor according to Claim 2 or 3, **characterized in that** the area of the housing (2) in which the step-like top surface (14) of the housing (2) borders the lateral surface (5) of the housing (2) is configured in the form of a rounded edge (16), wherein the inner wall (7) of the decoupling element (3) is formed in a fourth area (10) in an essentially complementary fashion with respect to the rounded edge (16) of the housing (2) .

5. Ultrasonic sensor according to Claim 4, **characterized in that** the fourth area (10) of the inner wall (7) of the decoupling element (3) is strained by the contraction of the elastic material around the rounded edge (16) of the housing (2) in such a way that the inner wall (7) in this area (18) rests flush against the rounded edge (16) of the housing (2).

6. Ultrasonic sensor according to one of Claims 1 to 5, **characterized in that** the lateral surface (5) of the housing (2) has at least one recess and the inner wall (7) of the decoupling element (3) has at least one elevation and/or the lateral surface (5) of the housing (2) has at least one elevation and the inner wall (7) of the decoupling element (3) has at least one recess for latching the decoupling element into the housing (2).

7. Ultrasonic sensor according to one of Claims 2 to 6, **characterized in that** the decoupling element (3) is formed in the third area (9) in the form of a lip (17) or in the form of a rotationally symmetrical body with a bore along the axis of rotation (18), for example in the form of a hollow cylinder or a frustum of a cone provided with a bore.

8. Ultrasonic sensor according to one of Claims 2 to 7, **characterized in that** the decoupling element (3) is formed in the first area (8) in the form of a frustum of a cone provided with a bore.

9. Ultrasonic sensor system, comprising an ultrasonic sensor according to one of Claims 1 to 8 and a sensor receptacle (19) for receiving the ultrasonic sensor.

## Revendications

1. Capteur à ultrason, comprenant
- une cuvette à membrane (1),
- un boîtier (2) et
- un élément de découplage (3),
la cuvette à membrane (1) et le boîtier (2) présentant chacun une surface d'enveloppe (4, 5), l'élément de découplage (3) étant réalisé au moins en partie en un matériau élastique,
l'élément de découplage (3) présentant un évidement traversant (6) qui est limité par une paroi interne (7) de l'élément de découplage (3), la cuvette à membrane (1) et/ou le boîtier (2) étant disposés au moins en partie dans l'évidement (6),
**caractérisé en ce que**
la paroi interne (7) de l'élément de découplage (3) est tendue par contraction du matériau élastique d'au moins une région respective périphérique (8, 9, 10) de la surface d'enveloppe (4) de la cuvette à membrane (1) entourant la cuvette à membrane (1) et le boîtier (2) et/ou d'une couche de laque (11) appliquée sur la surface d'enveloppe (4) de la cuvette à membrane (1) et de la surface d'enveloppe (5) du boîtier, de telle sorte que la paroi interne (7) s'applique dans cette région en affleurement contre la surface d'enveloppe (4) de la cuvette à membrane (1) et/ou de la couche de laque (11) appliquée sur la surface d'enveloppe (4) de la cuvette à membrane (1) et contre la surface d'enveloppe (5) du boîtier (2).

2. Capteur à ultrason selon la revendication 1, **caractérisé en ce que** la dimension extérieure (12) de la cuvette à membrane (1) définie par la surface d'enveloppe (4) est inférieure à la dimension extérieure (13) du boîtier (2) définie par la surface d'enveloppe (5), la cuvette à membrane (1) étant disposée sur et/ou dans le boîtier (2) de telle sorte que le boîtier (2) présente une surface de recouvrement (14) d'apparence étagée entourant la cuvette à membrane (1), la paroi interne (7) de l'élément de découplage (3) étant réalisée dans une première région (8) de manière essentiellement complémentaire de la surface d'enveloppe (4) de la cuvette à membrane (1) et/ou d'une couche de laque (11) appliquée sur la surface d'enveloppe (4) de la cuvette à membrane (1) et/ou dans une deuxième région (15) de manière essentiellement complémentaire de la surface de recouvrement (14) d'apparence étagée du boîtier (2) et/ou dans une troisième région (9) de manière essentiellement complémentaire d'une région de la surface d'enveloppe (5) du boîtier (2) adjacente à la surface de recouvrement (14) d'apparence étagée du boîtier (2).

3. Capteur à ultrason selon la revendication 2, **caractérisé en ce que** la paroi interne (7) de l'élément de découplage (3) est réalisée dans une troisième région (9) de manière essentiellement complémentaire d'une région de la surface d'enveloppe (5) du boîtier (2) adjacente à la surface de recouvrement (14) d'apparence étagée du boîtier (2), la troisième région (9) de la paroi interne (7) de l'élément de découplage (3) étant tendue par la contraction du matériau élastique autour de la surface d'enveloppe (5) du boîtier (2) de telle sorte que la paroi interne (7) s'applique dans cette région (9) en affleurement contre la surface d'enveloppe (5) du boîtier (2).

4. Capteur à ultrason selon la revendication 2 ou 3, **caractérisé en ce que** la région du boîtier (2) dans laquelle la surface de recouvrement (14) d'apparence étagée du boîtier (2) est adjacente à la surface d'enveloppe (5) du boîtier (2) est configurée sous la forme d'une arête arrondie (16), la paroi interne (7) de l'élément de découplage (3) étant réalisée dans une quatrième région (10) de manière essentiellement complémentaire de l'arête arrondie (16) du boîtier (2) .

5. Capteur à ultrason selon la revendication 4, **caractérisé en ce que** la quatrième région (10) de la paroi interne (7) de l'élément de découplage (3) est tendue par la contraction du matériau élastique autour de l'arête arrondie (16) du boîtier (2) de telle sorte que la paroi interne (7) s'applique dans cette région (18) en affleurement contre l'arête arrondie (16) du boîtier (2).

6. Capteur à ultrason selon l'une quelconque des revendications 1 à 5, **caractérisé en ce que** la surface d'enveloppe (5) du boîtier (2) présente au moins un évidement et la paroi interne (7) de l'élément de découplage (3) présente au moins un rehaussement et/ou la surface d'enveloppe (5) du boîtier (2) présente au moins un rehaussement et la paroi interne (7) de l'élément de découplage (3) présente au moins un évidement pour l'encliquetage de l'élément de découplage avec le boîtier (2).

7. Capteur à ultrason selon l'une quelconque des revendications 2 à 6, **caractérisé en ce que** l'élément de découplage (3) est réalisé dans la troisième région (9) sous la forme d'une lèvre (17) ou sous la forme d'un corps à symétrie de révolution avec un alésage le long de l'axe de rotation (18), par exemple sous la forme d'un cylindre creux ou d'un tronc de cône pourvu d'un alésage.

8. Capteur à ultrason selon l'une quelconque des revendications 2 à 7, **caractérisé en ce que** l'élément de découplage (3) est réalisé dans la première région (8) sous la forme d'un tronc de cône pourvu d'un alésage.

9. Système de capteur à ultrason comprenant un capteur à ultrason selon l'une quelconque des revendications 1 à 8, et un logement de capteur (19) pour recevoir le capteur à ultrason.
